# EUROPÄISCHE PATENTSCHRIFT

(11) **EP 2 032 609 B1**
(45) Veröffentlichungstag und Bekanntmachung des Hinweises auf die Patenterteilung: **02.09.2009**
(21) Anmeldenummer: 07729713.3
(22) Anmeldetag: 31.05.2007
(51) Int. Cl.: C08F 2/18, C08F 12/08, C08J 9/20, C08J 9/12

(54) **VERFAHREN ZUR HERSTELLUNG VON EXPANDIERBAREN STYROLPOLYMERISATEN**
PROCESS FOR PRODUCTION OF EXPANDABLE STYRENE POLYMERS
PROCÉDÉ DE FABRICATION DE POLYMÈRES DE STYRÈNE EXPANSIBLES

(30) Priorität: 13.06.2006 EP 06115374
(43) Veröffentlichungstag der Anmeldung: 11.03.2009
(73) Patentinhaber: BASF SE, 67056 Ludwigshafen (DE)
(72) Erfinder: KREBS, Thilo, 68259 Mannheim (DE); HOLOCH, Jan, 69181 Leimen (DE); SCHMIED, Bernhard, 67227 Frankenthal (DE)
(86) Internationale Anmeldenummer: PCT/EP2007/055306
(87) Internationale Veröffentlichungsnummer: WO 2007/144273

(56) Entgegenhaltungen:
- EP-A1- 0 304 582
- EP-A1- 0 476 256
- EP-A2- 1 057 838
- DE-C1- 19 816 469
- JP-A- 8 085 706

## Beschreibung

Die Erfindung betrifft ein Verfahren zur Herstellung von expandierbaren Styrolpolymerisaten mit enger Perlgrößenverteilung bei hoher spezifischer Reaktorausbeute durch Polymerisation der Monomeren in wässriger Suspension in Gegenwart eines flüchtigen Treibmittels.

Schaumstoffe auf Basis von Styrolpolymerisaten haben als Wärmedämm- und Verpackungsmaterial eine große technische Bedeutung erlangt. Sie werden großtechnisch dadurch hergestellt, dass man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Als Suspensionsstabilisatoren werden hierbei üblicherweise neben Molekülkolloiden wie Polyvinylalkohol (PVA) und Polyvinylpyrrolidon (PVP) schwerlösliche Salze wie Ca₃(PO₄)₂ (sogenannte Pickering-Salze) in Kombination mit Alkali- oder Erdalkali-Alkylsulfonaten eingesetzt.

In der EP-A 575 872 ist ein Verfahren zur Herstellung von perlförmigen expandierbaren Styrolpolymerisaten durch Polymerisation von Styrol in wässriger Suspension in Gegenwart von Treibmitteln beschrieben. Als Suspensionsstabilisatorsystem wird beispielsweise eine Mischung aus Magnesiumpyrophosphat, Natrium-Alkylsulfonaten und einem Natriumacrylat eingesetzt. Das Verfahren hat jedoch den Nachteil, dass eine verhältnismäßig breite Perlgrößenverteilung erhalten wird. Dies hat zur Folge, dass die gewünschten Perlfraktionen nicht ohne gleichzeitige Bildung sogenannter Randfraktion hergestellt werden können.

Die EP-A 304 582 betrifft ein Verfahren zur Herstellung von expandierbaren Styrolpolymerisaten mit enger Korngrößenverteilung durch Polymerisation von Styrol in wässriger Suspension. Als Stabilisatorsystem wird eine Mischung aus einem organischen Schutzkolloid, z.B. Polyvinylpyrrolidon oder Hydroxyethylcellulose, und einem anorganischen Stabilisator, z.B. einem Calcium- oder Barium-Phosphat oder -Sulfat eingesetzt. Zur Steuerung der Korngröße und Korngrößenverteilung werden der Suspension 50 bis 500 ppm eines vorzugsweise schwerlöslichen Carbonats zugegeben. Das Verfahren hat den Nachteil, dass die organischen Schutzkolloide eine starke Verunreinigung des Abwassers verursachen, welches aufwendig geklärt werden muss.

Bei den genannten Verfahren wird EPS im diskontinuierlich betriebenen Rührkessel hergestellt. Die bisherige Praxis der Reaktorbefüllung erfolgt sequenziell, zuerst die wässrige und nachfolgend die organische Phase. Nach Befüllung wird der Reaktor aufgeheizt. Das sequenzielle Befüllen des Reaktors war in der Vergangenheit unumgänglich, da die Präparation der wässrigen Phase im Kessel erfolgte.

Die EP-A 915 126 beschreibt ein Verfahren zur Herstellung von perlförmigen expandierbaren Styropolymerisaten, bei dem zur Erhöhung des Umsatzes und Verkürzung des Polymerisationszyklus die Polymerisation von Styrol in wässriger Suspension in Gegenwart von einem bei niedrigen Temperaturen zerfallenden, multifunktionellen Peroxid und einem bei einer höheren Temperatur zerfallendem Peroxid durchgeführt wird.

Aufgabe der vorliegenden Erfindung war es, den genannten Nachteilen abzuhelfen und ein Verfahren zur Suspensionspolymerisation von expandierbaren Styrolpolymerisaten mit enger und von Ansatz zu Ansatz reproduzierbarer Perlgrößenverteilung bei einer hohen spezifischen Reaktorausbeute zu finden. Die Erhöhung der Anlagenkapazitäten sollte dabei mit geringem finanziellem Aufwand realisierbar sein.

Demgemäss wurde ein Verfahren zur Herstellung von expandierbaren Styrolpolymerisaten durch Polymerisation der Monomeren in wässriger Suspension in Gegenwart eines flüchtigen Treibmittels gefunden, wobei die Styrol-haltige organische Phase über einen Zeitraum von 5 bis 60 Minuten gleichzeitig mit der wässrigen Phase in den Rührkessel dosiert wird.

Bevorzugt erfolgt der Start der Dosierung der organischen Phase nachdem die Dosierung der wässrigen Phase angelaufen ist mit kurzem Zeitversatz. Damit ist sichergestellt, dass die Befüllung des Reaktors im Wasserüberschuss beginnt. Die parallele Dosierung beider Phasen verkürzt die Reaktorzykluszeit um die Zeit der Dosierung der wässrigen Phase und abzüglich des Zeitversatzes. Bevorzugt erfolgt die Dosierung der organischen Phase 1 bis 20 Minuten, besonders bevorzugt 2 bis 5 Minuten nach Beginn der Dosierung der wässrigen Phase und dauert 1 bis 20 Minuten, besonders bevorzugt 2 bis 5 Minuten nach Beendigung der Dosierung der wässrigen Phase an.

Zur weiteren Reaktorzykluszeitverkürzung wird der reine Wasseranteil der wässrigen Phase entweder im Vorlagekessel vorgeheizt und/oder während der Befüllung aufgeheizt. Mit dem Vorheizen des Wassers der wässrigen Phase wird nach Ende der Reaktorbefüllung eine höhere Temperatur erreicht. Dies verkürzt die Reaktorzykluszeit um die Zeitspanne die bisher benötigt wird, um die Reaktoren auf die jetzt erzielbare Temperatur nach Befüllung zu erhitzen. Der Reaktorinhalt wird bevorzugt bis zur Beendigung der Dosierung beider Phasen auf eine Innentemperatur im Bereich von 40 bis 100°C, besonders bevorzugt im Bereich von 55 bis 75°C gebracht.

Die wässrige Phase enthält neben Wasser bevorzugt Magnesiumpyrophosphat, Tricalciumphosphat und/oder Magnesiumsulfat und die organische Phase Styrol und organische Peroxide. Das Volumenverhältnis der organischen Phase zur wässrigen Phase beträgt in der Regel 2:1 bis 1:2, insbesondere 3:2bis 1:1.

Besonders bevorzugt ist ein Verfahren nach einem des Ansprüche 1-7, welches die Stufen a) bis f) umfasst:
a) Dosierung der wässrigen Phase über einen Zeitraum von 5 bis 60 Minuten;
b) Dosierung der organischen Phase über einen Zeitraum von 5 bis 60 Minuten, wobei die Dosierung 1 bis 20 Minuten nach Beginn der Dosierung der wässrigen Phase begonnen wird und 1 bis 20 Minuten nach Beendigung der Dosierung der wässrigen Phase andauert;
c) Aufheizen des Reaktorinhalts bis zur Beendigung der Dosierung beider Phasen (Stufe a) und b)) auf eine Innentemperatur im Bereich von 40 bis 100°C;
d) anschließend Aufheizen des Reaktorinhalts innerhalb von 1 bis 4 Stunden auf eine Temperatur im Bereich von 120 bis 140°C unter Dosierung eines flüchtigen Treibmittels;
e) Halten des Reaktorinhaltes bei 120°C bis 140°C für weitere 1 bis 4 Stunden;
f) Kühlen des Reaktorinhaltes.

Bei der Herstellung der wässrigen Suspension oder während der Aufheizphase vor Erreichen einer Temperatur von 100°C kann ein Hydroxyalkylamin zugegeben werden. Besonders bevorzugt wird das Hydroxylamin in der organischen Phase vorgelegt. Als Hydroxyalkylamine werden bevorzugt Alkyl-di(2-Hydroxyethyl)amine, besonders bevorzugt C12/C14-Alkyl-di(2-hydroxyethyl)-amin, welches im Handel unter der Bezeichnung Armostat® 400 der Firma Akzo erhältlich ist, eingesetzt.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Im erfindungsgemäßen Verfahren kommen daher als Comonomere z.B. in Frage: α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Im erfindungsgemäßen Verfahren werden als bevorzugte flüchtige Treibmittel 1 bis 10 Gew.-%, vorzugsweise 3 bis 8 Gew.-%, eines C₃- bis C₇-Kohlenwasserstoffs, wie Propan, Butan, Isobutan, n-Pentan, i-Pentan, Neopentan und/oder Hexan eingesetzt. Grundsätzlich können auch andere flüchtige Substanzen verwendet werden.

Die Polymerisation wird durch übliche styrollösliche Katalysatoren ausgelöst, beispielsweise Dibenzoylperoxid, tert. Butylperbenzoat, Dicumylperoxid, Di-tert.butylperoxid und deren Mischungen, vorzugsweise in Mengen von 0,05 bis 1 Gew.-%, bezogen auf die Monomeren.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Tetrabrombisphenol-A-Derivate, bromierte Diphenylethane, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Geeignete Zusatzstoffe zur Erniedrigung der Wärmeleitfähigkeit sind Kohlenstoffpartikel, wie Ruß und Graphit. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.-% eingesetzt. Besonders gut geeignet ist aber Graphit, wobei eine mittlere Partikelgröße von 0,5 bis 200 µm, vorzugsweise von 1 bis 25 µm, und insbesondere von 2 bis 20 µm, ein Schüttgewicht von 100 bis 500 g/l und eine spezifische Oberfläche von 5 bis 20 m²/g bevorzugt sind. Es kann Naturgraphit oder gemahlener synthetischer Graphit eingesetzt werden. Die Graphitpartikel sind im Styrolpolymerisat in Mengen von 0,1 bis 25 Gew.-%, insbesondere von 0,5 bis 8 Gew.-% enthalten.

Entsprechend werden die Zusatzstoffe im erfindungsgemäßen Verfahren zugegeben oder anschließend auf die erfindungsgemäß hergestellten expandierbaren Styrolpolymerisate aufgebracht.

Die Suspensionspolymerisation von Styrol ist an sich bekannt. Sie ist ausführlich beschrieben im Kunststoff-Handbuch, Band V, "Polystyrol", Carl Hanser-Verlag, 1969, Seiten 679 bis 688. Dabei wird im allgemeinen Styrol, ggf. zusammen mit den oben genannten Comonomeren, in Wasser suspendiert und in Gegenwart von organischen oder anorganischen Suspensionsstabilisatoren auspolymerisiert.

Im erfindungsgemäßen Verfahren werden perlförmige expandierbare Styrolpolymerisate hergestellt durch Polymerisation von Styrol, ggf. zusammen mit bis zu 50 Gew.-% der obengenannten Comonomeren, in wässriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert.-Dodecylmercaptan oder DMS (dimeres α-Methylstyrol) verwendet. Der Regler wird im allgemeinen in einer Menge von 0,0001 bis 0,5 Gew.-%, bezogen auf Monomere, verwendet.

Zur Stabilisation der wässrigen Suspension wird bevorzugt ein Phosphat, besonders bevorzugt Magnesiumpyrophosphat oder Tricalciumphosphat verwendet.

Für das erfindungsgemäße Verfahren wird bevorzugt eine Mischung aus Magnesiumpyrophosphat, einem sekundären Alkali- oder Erdalkali-Alkylsulfonat und gegebenenfalls einem eine Doppelbindung tragenden Carboxylat als Suspensionsstabilisatorsystem verwendet. Das Carboxylat verbessert das Stabilisierungsvermögen und verhindert Belagbildung an den Kesselwänden. Darüber hinaus werden auch die Produkteigenschaften, wie Expandiervermögen und elektrostatische Aufladbarkeit, günstig beeinflusst.

Magnesiumpyrophosphat wird im allgemeinen in einer Konzentration zwischen 0,03 und 2,0, vorzugsweise zwischen 0,05 und 0,5 und besonders bevorzugt zwischen 0,1 und 0,2 Gew.-%, bezogen auf die wässrige Phase, eingesetzt.

Das Magnesiumpyrophosphat wird vorzugsweise unmittelbar vor der Polymerisation durch Vereinigung möglichst konzentrierter Lösungen von Pyrophosphat und Magnesiumionen hergestellt, wobei die zur Fällung von Mg₂P₂O₇ stöchiometrisch erforderliche Menge eines Magnesiumsalzes eingesetzt wird. Das Magnesiumsalz kann in fester Form oder in wässriger Lösung vorliegen. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄ 7 H₂O) hergestellt. Das Magnesiumsalz wird in mindestens der stöchiometrisch erforderlichen Menge, vorzugsweise in stöchiometrischer Menge, zugegeben. Für das erfindungsgemäße Verfahren ist günstig, wenn kein Überschuss an Alkalipyrophosphat vorliegt.

Im erfindungsgemäßen Verfahren werden bevorzugt Sulfonatgruppen enthaltende Emulgatoren, sogenannte Extender eingesetzt. Zu diesen Extendern gehören beispielsweise Natriumdodecylbenzolsulfonat, langkettige Alkylsulfonate, Vinylsulfonat, Diisobutylnaphthalinsulfonat. Als Extender werden bevorzugt Alkalisalze der Dodecylbenzolsulfonsäure und/oder Alkalisalze eines Gemisches von C₁₂-C₁₇-Alkylsulfonsäuren eingesetzt. Ein besonders geeignetes Gemisch von C₁₂C₁₇-Alkylsulfonaten besteht aus überwiegend sekundären Natriumalkylsulfonaten mit der mittleren Kettenlänge C₁₅. Ein derartiges Gemisch wird unter der Bezeichnung Mersolat® K 30 von der Firma Bayer AG vertrieben. Die Extender erhöhen die Fähigkeit schwerlösliche anorganische Verbindungen, die Suspension zu stabilisieren.

Die Extender werden in der Regel in Mengen zwischen 0,5 und 15, vorzugsweise 2 bis 10 Gew.-%, bezogen auf Magnesiumpyrophosphat, eingesetzt.

Durch Anpassung der Dosierzeiten des Extenders kann der gewünschte Perldurchmesser d' in weiten Bereichen gezielt eingestellt werden (beispielsweise im Bereich von 0,5 bis 3 mm). Die Beeinflussung der Perlgrößenverteilung gelingt bevorzugt durch den Zusatz von Carbonat/Hydrogencarbonat.

Bevorzugt werden bei der Polymerisation 1 bis 1000, vorzugsweise 50 bis 500 ppm, bezogen auf die Wasserphase, eines wasserlöslichen Carbonats und/oder Hydrogencarbonats zugesetzt. Wird das Carboxylat in Form von Säure, z.B. Acrylsäure eingesetzt, dann bildet diese mit Carbonationen eine äquivalente Menge Hydrogencarbonat. Dies muss bei der nachstehenden quantitativen Betrachtung berücksichtigt werden. Es hat sich gezeigt, dass ein Molverhältnis Carbonat: Hydrogencarbonat-lonen von 3 : 1 bis 1 : 5, vorzugsweise von 1 : 0 bis 1 : 2 in der Suspension optimal ist. Geeignete Carbonat- bzw. Hydrogencarbonate sind solche von Natrium, Kalium und Ammonium. Es ist günstig, die Carbonate bzw. Hydrogencarbonats im Verlauf der Polymerisation bei einem Styrol-Umsatz von mindestens 5 %, vorzugsweise mindestens 20 % zuzusetzen. Setzt man das Carbonat gleich zu Beginn der Polymerisation zu, dann besteht die Gefahr, dass der Ansatz koaguliert.

Es hat sich gezeigt, dass es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 5 und 100 kg/m³ vorgeschäumt werden.

Die vorgeschäumten Teilchen können dann nach üblichen Verfahren zu Schaum-Formteilen mit einer Dichte von 5 bis 100 kg/m³ ausgeschäumt werden.

Das erfindungsgemäße Verfahren weist zahlreiche Vorteile auf. Die Teilchendurchmesser der expandierbaren perlförmigen Styrolpolymerisate lassen sich gut und präzise steuern. Die treibmittelhaltigen expandierbaren Perlpolymerisate weisen niedrige Innenwassergehalte, ein hohes Expandiervermögen und gute und konstante Verarbeitungseigenschaften auf. Überdies ist die Neigung zur elektrostatischen Aufladung gering.

Es ist außerdem möglich, verschiedene organische Monomerphasen ohne neue Abstimmung des Stabilisatorsystems einzusetzen, z.B. für flammgeschützte und nichtflammgeschützte Marken.

Nach Vollendung der Polymerisationszykluszeit wird der Kessel üblicherweise über den Doppelmantel auf eine Temperatur zwischen 60 und 30°C abgekühlt und über das Bodenventil und durch die nachgeschaltete Transferpumpe in den Suspensionstank transferiert.

Die Vorteile des erfindungsgemäßen Verfahrens liegen
1. in der Erhöhung der möglichen Produktionsmenge (die Investition für die Maßnahme ist sehr gering, es gibt kein Verfahrenstechnisches Risiko);
2. in der Reduzierung der Schwankung der Teilchengrößenverteilung;
3. in der Reduzierung des benötigten Dampfes zur Aufheizung der Reaktoren.

Nach dem erfindungsgemäßen Verfahren kann die Reaktorzykluszeit durch parallele Dosierung von organischer und wässriger Phase, sowie vorgezogener Aufheizphase deutlich verkürzt werden. Der prozentuale Unterschied der Gesamtreaktorzykluszeit gibt direkt die prozentuale Erhöhung der Reaktor/Anlagenkapazität. Weitere Kapazitätserhöhungen sind durch Erhöhung des Phasenanteils und Reduzierung Polymeriationszykluszeit möglich.

Neben der Verkürzung der Reaktorzykluszeit wird die Schwankung der Teilchengrößenverteilung reduziert, da die Aufheizbedingungen vergleichmäßigt werden, somit die Reaktion im Anfangsbereich der Polymerisation gleichmäßiger abläuft und die Fixierung der Teilchengrößenverteilung in einem engeren Fenster stattfindet.

### Beispiele:

### Herstellung einer Mg₂P₂O₇-Suspension:

Zur Herstellung einer Mg₂P₂O₇-Suspension wurden für jedes der folgenden Beispiele vorab jeweils 1,20 kg Na₄P₂O₇ in 50 kg Wasser bei Raumtemperatur gelöst. Unter Rühren wurde zu dieser Lösung eine Lösung aus 2,22 kg MgSO₄ x 7 H₂O in 8,00 kg Wasser gegeben und anschließend für 5 Minuten gerührt. Es entstand eine wässrige Suspension von Magnesiumpyrophosphat (MPP).

### Beispiel 1:

In einem druckfesten Rührkessel aus korrosionsfestem Edelstahl wurden unter Rühren 550 dm³ Wasser (Temperatur 80°C) und die Mg₂P₂O₇-Suspension zugefügt. Mit einem Zeitverzug von 2 Minuten wurde mit der Dosierung von 590 kg Styrol zusammen mit 2,99 kg Dicumylperoxid und 0,04 kg Lucidol® (75 %ig), 3,90 kg Hexabromocyclododekan, 3 ppm Armostat® 400 und 310 ppm Polyethylenwachs (bez. organische Phase) begonnen. Die Zugabe der organischen Phase endete 3 Minuten, nachdem die Dosierung der Wasserphase abgeschlossen war. Während der gesamten Befülldauer von 15 min wurde der Reaktor beheizt. Am Ende der Befüllung wurde eine Innentemperatur von 75°C gemessen.

Der Rührkessel wurde verschlossen, ein Stickstoffdruck von 1 bar eingestellt und in 0,65 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat®K30 hinzugefügt. 50 min nach Erreichen einer Temperatur von 80°C wurden 0,24 kg Natriumhydrogencarbonat und 0,15 kg Natriumcarbonat der Suspension zugesetzt. 120 min später wurden 46,4 kg Pentan zugefügt. Nach 324 min wurden 0,98 kg Bittersalz zugegeben.

### Vergleichsbeispiel 1

In einem druckfesten Rührkessel aus korrosionsfestem Edelstahl wurden 550 dm³ Wasser vorgelegt und unter Rühren die Mg₂P₂O₇-Suspension zugefügt. Anschließend wurden 590 kg Styrol zusammen mit 2,99 kg Dicumylperoxid und 0,04 kg Lucidol® (75 %ig), 3,90 kg Hexabromocyclododekan, 3 ppm Armostat® 400 und 310 ppm Polyethylenwachs (bez. organische Phase) zugegeben. Die Gesamtdauer der Befüllung betrug 30 min. Die Innentemperatur betrug 20°C.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80°C wurden 0,12 kg einer 40 %igen wässrigen Lösung von Mersolat®K30 hinzugefügt. 50 min nach Erreichen einer Temperatur von 80°C wurden 0,24 kg Natriumhydrogencarbonat und 0,15 kg Natriumcarbonat der Suspension zugesetzt. 120 min später wurden 46,4 kg Pentan zugefügt. Nach 324 min wurden 0,98 kg Bittersalz zugegeben.

### Beispiel 2

In einem druckfesten Rührkessel aus korrosionsfestem Edelstahl wurden unter Rühren 550 dm³ Wasser (Temperatur 80°C) und die Mg₂P₂O₇-Suspension zugefügt. Mit einem Zeitverzug von 2 Minuten wurde mit der Dosierung von 590 kg Styrol zusammen mit 2,99 kg Dicumylperoxid und 0,04 kg Lucidol® (75 %ig), 3,90 kg Hexabromocyclododekan, 3 ppm Armostat® 400 und 310 ppm Polyethylenwachs (bez. organische Phase) begonnen. Die Zugabe der organischen Phase endete 3 Minuten, nachdem die Dosierung der Wasserphase abgeschlossen war. Während der gesamten Befülldauer von 15 min wurde der Reaktor beheizt. Am Ende der Befüllung wurde eine Innentemperatur von 75°C gemessen.

Der Rührkessel wurde verschlossen, ein Stickstoffdruck von 1 bar eingestellt und in 0,65 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80 °C wurden 0,12 kg einer 40 %igen wässrigen Lösung von Mersolat®K30 hinzugefügt. 50 min nach Erreichen einer Temperatur von 80°C wurden 0,25 kg Natriumcarbonat der Suspension zugesetzt. 120 min später wurden 46,4 kg Pentan zugefügt. Nach 324 min wurden 0,98 kg Bittersalz zugegeben.

### Vergleichsbeispiel 2

In einem druckfesten Rührkessel aus korrosionsfestem Edelstahl wurden 550 dm³ Wasser vorgelegt und unter Rühren die Mg₂P₂O₇-Suspension zugefügt. Anschließend wurden 590 kg Styrol zusammen mit 2,99 kg Dicumylperoxid und 0,04 kg Lucidol® (75 %ig), 3,90 kg Hexabromocyclododekan, 3 ppm Armostat® 400 und 310 ppm Polyethylenwachs (bez. organische Phase) zugegeben. Die Gesamtdauer der Befüllung betrug 30 min. Die Innentemperatur betrug 20°C.

Der Rührkessel wurde verschlossen, ein Stickstoffdruck von 1 bar eingestellt und in 1,8 h auf 105°C erhitzt. Danach wurde die Mischung in 5,5 h auf 135°C erhitzt. Anschließend rührte man die Mischung noch für weitere 0,5 h bei 135°C.

Etwa 110 min nach Erreichen einer Temperatur von 80 °C wurden 0,12 kg einer 40 %igen wässrigen Lösung von Mersolat®K30 hinzugefügt. 50 min nach Erreichen einer Temperatur von 80°C wurden 0,25 kg Natriumcarbonat der Suspension zugesetzt. 120 min später wurden 46,4 kg Pentan zugefügt. Nach 324 min wurden 0,98 kg Bittersalz zugegeben.

Nach dem Abkühlen wurde dann das erhaltene Perlpolymerisat jeweils von der wässrigen Phase getrennt, gewaschen, oberflächengetrocknet und mit 0,1 Gew.-% (bezogen auf das Gewicht der unbeschichteten EPS-Perlen) Mersolat® K30 beschichtet. Der mittlere Perldurchmesser d' wurde nach Rosin-Rammler-Sperling-Bennett gemäß DIN 66 145 bestimmt.

Die Versuche und Vergleichsversuche wurden jeweils 5 mal durchgeführt und die Abweichungen vom mittleren Perldurchmesser d' (Standardabweichung) bestimmt. Die Zykluszeit von Beginn des Befüllens des Reaktors bis zum Beginn des Kühlens wurde bestimmt.

| Beispiel | Mittlerer Perldurchmesser d' [mm] | Standard abweichung | Zeit von Beginn Füllen bis Beginn Kühlen [h] |
|---|---|---|---|
| 1 | 1,11 | 0,07 | 6,9 |
| Vergleich 1 | 1,09 | 1,0 | 8,3 |
| 2 | 1,13 | 0.08 | 6,9 |
| Vergleich 2 | 1,12 | 1.1 | 8,3 |

## Patentansprüche

1. Verfahren zur Herstellung von expandierbaren Styrolpolymerisaten durch Polymerisation der Monomeren in wässriger Suspension in einem Rührkessel in Gegenwart eines flüchtigen Treibmittels, **dadurch gekennzeichnet, dass** die Styrol-haltige organische Phase über einen Zeitraum von 5 bis 60 Minuten gleichzeitig mit der wässrigen Phase in den Rührkessel dosiert wird.

2. Verfahren nach Anspruch 1, **dadurch gekennzeichnet, dass** die Dosierung der organischen Phase 1 bis 5 Minuten nach Beginn der Dosierung der wässrigen Phase beginnt und 1 bis 5 Minuten nach Beendigung der Dosierung der wässrigen Phase andauert.

3. Verfahren nach Anspruch 1 oder 2, **dadurch gekennzeichnet, dass** der Reaktorinhalt bis zur Beendigung der Dosierung beider Phasen auf eine Innentemperatur im Bereich von 40 bis 100°C gebracht wird.

4. Verfahren nach einem der Ansprüche 1 bis 3, **dadurch gekennzeichnet, dass** die wässrige Phase vor der Dosierung in den Reaktor auf eine Temperatur im Bereich von 40 bis 100°C gebracht wird.

5. Verfahren nach einem der Ansprüche 1 bis 4, **dadurch gekennzeichnet, dass** die wässrige Phase Magnesiumpyrophosphat, Tricalciumphosphat und/oder Magnesiumsulfat enthält.

6. Verfahren nach einem der Ansprüche 1 bis 5, **dadurch gekennzeichnet, dass** als organische Phase Styrol und organische Peroxide enthält.

7. Verfahren nach einem der Ansprüche 1 bis 6, **dadurch gekennzeichnet, dass** das Volumenverhältnis der organischen Phase zur wässrigen Phase 2:1 bis 1:2 beträgt.

8. Verfahren nach einem der Ansprüche 1 bis 7, umfassend die Stufen
a) Dosierung der wässrigen Phase über einen Zeitraum von 5 bis 60 Minuten;
b) Dosierung der organischen Phase über einen Zeitraum von 5 bis 60 Minuten, wobei die Dosierung 1 bis 20 Minuten nach Beginn der Dosierung der wässrigen Phase begonnen und 1 bis 20 Minuten nach Beendigung der Dosierung der wässrigen Phase andauert;
c) Aufheizen des Reaktorinhalts bis zur Beendigung der Dosierung beider Phasen (Stufe a) und b)) auf eine Innentemperatur im Bereich von 40 bis 100°C;
d) anschließend Aufheizen des Reaktorinhalts innerhalb von 1 bis 4 Stunden auf eine Temperatur im Bereich von 120 bis 140 °C unter Dosierung eines flüchtigen Treibmittels;
e) Halten des Reaktorinhaltes bei 120°C bis 140°C für weitere 1 bis 4 Stunden;
f) Kühlen des Reaktorinhaltes.

## Claims

1. A process for production of expandable styrene polymers via polymerization of the monomers in aqueous suspension in a stirred tank in the presence of a volatile blowing agent, which comprises metering the styrene-containing organic phase over a period of from 5 to 60 minutes simultaneously with the aqueous phase into the stirred tank.

2. The process according to claim 1, wherein the metering of the organic phase starts from 1 to 5 minutes after the start of the metering of the aqueous phase and continues from 1 to 5 minutes after the end of the metering of the aqueous phase.

3. The process according to claim 1 or 2, wherein the reactor contents are brought to an internal temperature in the range from 40 to 100°C until the metering of both phases has ended.

4. The process according to any of claims 1 to 3, wherein, prior to metering into the reactor, the aqueous phase is brought to a temperature in the range from 40 to 100°C.

5. The process according to any of claims 1 to 4, wherein the aqueous phase comprises magnesium pyrophosphate, tricalcium phosphate, and/or magnesium sulfate.

6. The process according to any of claims 1 to 5, which comprises, as organic phase, styrene and organic peroxides.

7. The process according to any of claims 1 to 6, wherein the ratio by volume of the organic phase to the aqueous phase is from 2:1 to 1:2.

8. A process for production of expandable styrene polymers via polymerization of the monomers in aqueous suspension in a stirred tank in the presence of a volatile blowing agent, comprising the following steps:
a) metering of the aqueous phase over a period of from 5 to 60 minutes;
b) metering of the organic phase over a period of from 5 to 60 minutes, the metering here being begun from 1 to 20 minutes after the start of the metering of the aqueous phase and continuing from 1 to 20 minutes after the end of the metering of the aqueous phase;
c) heating of the reactor contents until the end of the metering of the two phases (stage a) and b)) to an internal temperature in the range from 40 to 100°C;
d) then heating of the reactor contents within a period of from 1 to 4 hours to a temperature in the range from 120 to 140°C with metering of a volatile blowing agent;
e) keeping the reactor contents at from 120°C to 140°C for a further period of from 1 to 4 hours;
f) cooling the reactor contents.

## Revendications

1. Procédé pour la préparation de polymères de styrène expansibles, par polymérisation des monomères en suspension aqueuse dans un récipient à agitation, en présence d'un agent d'expansion volatil, **caractérisé en ce que** la phase organique contenant du styrène est introduite par addition dosée, en même temps que la phase aqueuse dans le récipient à agitation, en un espace de temps de 5 à 60 minutes.

2. Procédé selon la revendication 1, **caractérisé en ce que** l'introduction par addition dosée de la phase organique commence 1 à 5 minutes après le début de l'introduction par addition dosée de la phase aqueuse et se poursuit pendant 1 à 5 minutes après la fin de l'introduction par addition dosée de la phase aqueuse.

3. Procédé selon la revendication 1 ou 2, **caractérisé en ce que** le contenu du réacteur est porté à une température interne dans la plage de 40 à 100 °C jusqu'à l'achèvement de l'introduction dosée des deux phases.

4. Procédé selon l'une quelconque des revendications 1 à 3, **caractérisé en ce que** la phase aqueuse est portée à une température dans la plage de 40 à 100 °C avant l'introduction par addition dosée dans le réacteur.

5. Procédé selon l'une quelconque des revendications 1 à 4, **caractérisé en ce que** la phase aqueuse contient du pyrophosphate de magnésium, du phosphate tricalcique et/ou du sulfate de magnésium.

6. Procédé selon l'une quelconque des revendications 1 à 5, **caractérisé en ce que** la phase organique contient du styrène et des peroxydes organiques.

7. Procédé selon l'une quelconque des revendications 1 à 6, **caractérisé en ce que** le rapport en volume de la phase organique à la phase aqueuse va de 2:1 à 1:2.

8. Procédé selon l'une quelconque des revendications 1 à 7, comprenant les étapes suivantes :
a) introduction par addition dosée de la phase aqueuse en un espace de temps de 5 à 60 minutes ;
b) introduction par addition dosée de la phase organique en un espace de temps de 5 à 60 minutes, l'introduction par addition dosée de la phase organique commençant 1 à 20 minutes après le début de l'introduction par addition dosée de la phase aqueuse et se poursuivant pendant 1 à 20 minutes après la fin de l'introduction par addition dosée de la phase aqueuse ;
c) chauffage du contenu du réacteur jusqu'à l'achèvement de l'introduction par addition dosée des deux phases [étapes a) et b)] à une température interne dans la plage de 40 à 100 °C ;
d) ensuite chauffage du contenu du réacteur, en l'espace de 1 à 4 heures, jusqu'à une température dans la plage de 120 à 140 °C, avec introduction par addition dosée d'un agent d'expansion volatil ;
e) maintien du contenu du réacteur à une température de 120 °C à 140 °C pendant encore 1 à 4 heures ;
f) refroidissement du contenu du réacteur.
